# EUROPEAN PATENT SPECIFICATION

(11) **EP 3 369 963 B1**
(45) Date of publication and mention of the grant of the patent: **02.11.2022**
(21) Application number: 18159794.9
(22) Date of filing: 02.03.2018
(51) Int. Cl.: F16F 15/14, F16F 15/167

(54) **TORSIONAL VIBRATION DAMPER FOR AUTOMOTIVE APPLICATIONS**
TORSIONSSCHWINGUNGSDÄMPFER FÜR AUTOMOBILANWENDUNGEN
AMORTISSEUR DE VIBRATIONS DE TORSION POUR DES APPLICATIONS AUTOMOBILES

(30) Priority: 03.03.2017 IT 201700024112
(43) Date of publication of application: 05.09.2018
(73) Proprietor: Agla Power Transmission S.p.a., 10051 Avigliana (IT)
(72) Inventor: BERTOLINI, Mattia, 10125 TORINO (IT); BONÙ, Stefano, 10051 AVIGLIANA (TO) (IT)
(74) Representative: D'Angelo, Fabio

(56) References cited:
- EP-A2- 0 283 234
- GB-A- 574 516
- GB-A- 2 344 398
- JP-A- 2007 315 416
- US-A- 5 931 051

## Description

### PRIORITY CLAIM

This application claims priority from Italian Patent Application No. 102017000024112 filed on March 3, 2017.

The present invention relates to a torsional vibration damper for automotive applications.

GB574516A, EP0283234A2, US5931051A, JP2007315416A e GB2344398A show torsional vibration dampers as defined in the preamble of claim 1.

It is an object of the present invention to provide a torsional vibration damper for automotive applications, which has a simple and cheap design and allows an improvement, in use, of the state of stress thereof.

The aforesaid object is achieved by the present invention as it relates to a torsional vibration damper for automotive applications, as defined in claim 1.

For a better understanding of the present invention, a preferred embodiment is described below, by way of a non-limiting example and with reference to the appended drawings, wherein:

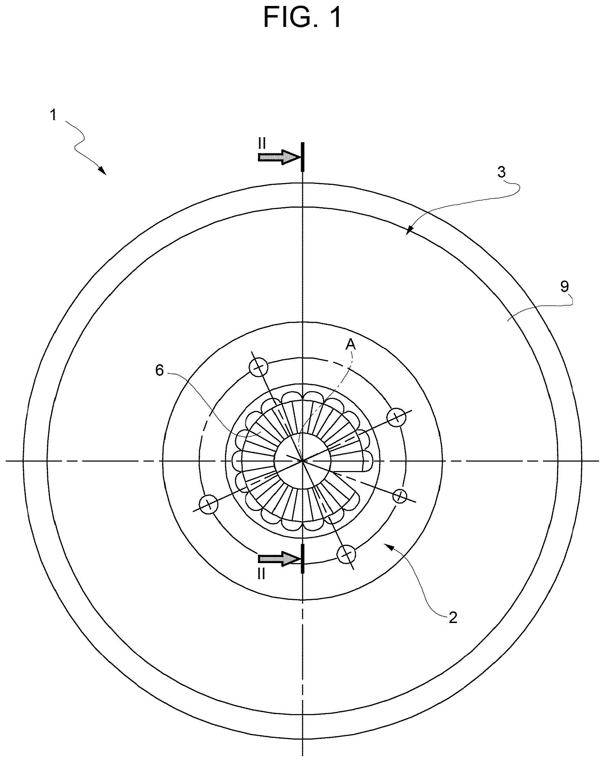

- Figure 1 is a frontal view of a torsional vibration damper realized according to the principles of the present invention;

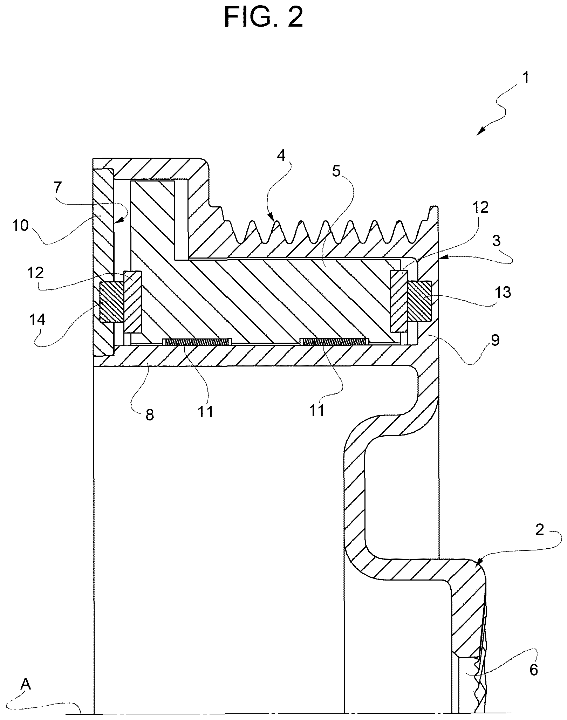

- Figure 2 is a semi-section, on an enlarged scale, according to the line II-II in Figure 1; and

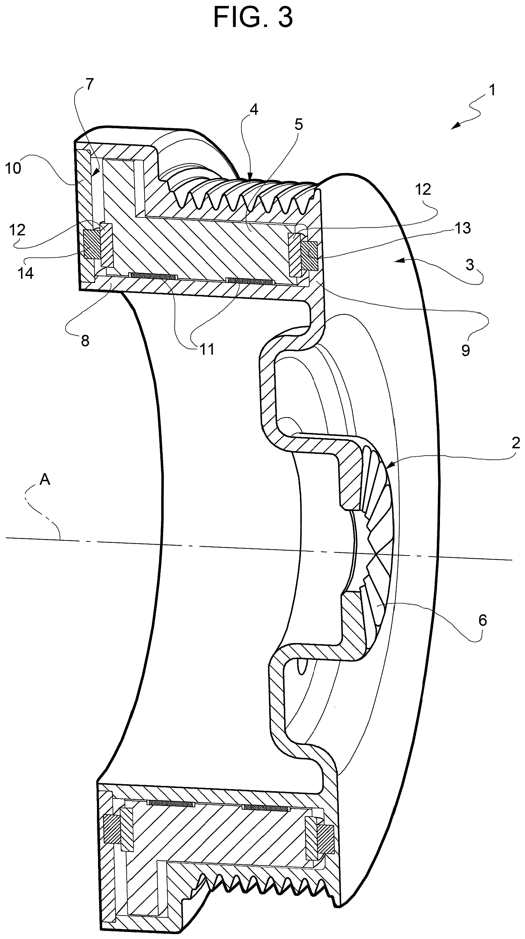

- Figure 3 is a perspective view, on an enlarged scale, and partially sectioned, of the damper in Figure 1.

With reference to the appended Figures, a torsional vibration damper for automotive applications is globally indicated with 1.

In detail, the damper 1 is suitable to be used on drive shafts, typically crankshafts (known in themselves and not illustrated), for endothermic engines of motor vehicles (also known in themselves and not illustrated) for reducing torsional vibrations, which are generated in operation during the rotation of the drive shafts themselves. In detail, the damper 1 acts as a "compensator" to balance irregularities during the rotation of the drive shaft of the motor vehicle to which it is applied.

The damper 1 has an axis A and essentially comprises:
- a hub 2 adapted to be angularly coupled in use to the drive shaft of a relative motor vehicle;
- an annular peripheral portion 3 extending orthogonally in a cantilever fashion from an outer annular portion of the hub 2 and defining, with a radially external annular surface thereof, a pulley 4 intended to be coupled, in use, to a transmission element (known in itself and not illustrated), for example a toothed belt; and
- an annular inertial mass 5 carried by the peripheral portion 3 from the side radially opposite with respect to the pulley 4.

In particular, the hub 2 has a central portion 6 with petals adapted to be coupled to the drive shaft.

The peripheral portion 3 defines an annular chamber 7 of axis A, inside which the inertial mass 5 is housed, in order to be able to oscillate torsionally, so as to dampen, in use, the torsional vibrations produced by the drive shaft.

In further detail, the chamber 7 is delimited by:
- the pulley 4;
- an annular wall 8 arranged further inward radially with respect to the pulley 4 and substantially parallel to the latter;
- a first annular head wall 9, orthogonal to axis A and fixed to corresponding axial ends of the pulley 4 and the annular wall 8; and
- a second annular head wall 10, orthogonal to axis A and fixed to axial ends of the pulley 4 and the annular wall 8 opposite those fixed to the head wall 9.

Preferably, the pulley 4, the annular wall 8, the head wall 9 and the hub 2 are produced integral, in one piece, for example, by means of forging; preferably, the head wall 10 is fixed to the pulley 4 and the annular wall 8 by means of welding.

The inertial mass 5 is supported axially on the annular wall 8 by friction tapes 11, preferably made of PTFE, and radially by friction discs 12, also preferably made of PTFE.

Then, silicon fluid or viscous oil is introduced into the chamber 7, which, due to the movement of the inertial mass 5, allows the torsional vibrations of the drive shaft to be dampened.

Advantageously, corresponding annular, elastic elements 13, 14, preferably made of rubber, are interposed between the inertial mass 5 and each head wall 9, 10 of the chamber 7.

More specifically, the elastic element 13 is axially interposed between the head wall 9 and the friction disc 12 adjacent thereto; similarly, the elastic element 14 is axially interposed between the head wall 10 and the friction disc 12 adjacent thereto.

The elastic elements 13, 14 allow an additional level of freedom to be added to the inertial mass 5: indeed, due to the elastic elements 13, 14, the latter can also move in an axial direction.

In practice, the damper 1 is able to:
- dampen the axial vibrations of the drive shaft, which are potentially problematic not only because of the stress produced, in use, on the hub 2, but also for the other components connected to the damper 1 itself, for example the fly-wheel, clutch, transmission; and
- reduce the stress on the hub 2 connected to the drive shaft.

This second effect is obtained due to the fact that the inertial mass 5 is "isolated" from the rest of the damper 1 since the tuning of the visco-elastic details is carried out so that the inertial mass 5 vibrates out-of-phase by 180° with respect to the other components. This phase-displacement allows the hub 2 not to feel the effect of the inertial mass 5, significantly reducing the stress, which, in use, is a critical aspect for torsional dampers of the type known.

Finally, it is apparent that modifications and variations can be made to the damper 1 described and illustrated herein without departing from the protective scope defined by the claims.

In detail, the damper 1 could comprise a single elastic ring interposed axially between the inertial mass 5 and one of the head walls 9, 10.

## Claims

1. A torsional vibration damper (1) for automotive applications having an axis (A) and comprising:
- a hub (2) adapted to be angularly coupled in use to a drive shaft of a motor vehicle;
- an annular peripheral portion (3) extending transversely in a cantilever fashion from an outer annular portion of said hub (2); and
- an inertial mass (5) carried by said peripheral portion (3);
wherein said inertial mass (5) has an annular structure, coaxial to said axis (A); wherein said peripheral portion (3) defines an annular chamber (7) coaxial to said axis (A); wherein said inertial mass (5) is housed in said chamber (7) so as to be able to oscillate torsionally with respect to said axis (A); and wherein the damper (1) also comprises at least one elastic element (13, 14) interposed axially between said inertial mass (5) and a delimiting surface (9, 10) of said chamber (7) so as to allow, in use, oscillation of said inertial mass (5) in a direction parallel to said axis (A);
**characterized by** comprising at least one friction disc (12) interposed axially between said elastic element (13, 14) and said inertial mass (5).

2. The damper according to claim 1, wherein said chamber (7) is delimited axially on opposite sides by respective annular head walls (9, 10) orthogonal to said axis (A); said elastic element (13, 14) being axially interposed between said inertial mass (5) and one of said head walls (9, 10) defining said delimiting surface.

3. The damper according to claim 2, wherein said chamber (7) is also delimited by two annular walls, respectively radially external and radially internal (4, 8) with respect to said axis (A) and connecting between them said head walls (9, 10).

4. The damper according to claim 3, wherein said radially external annular wall peripherally defines a pulley (4).

5. The damper according to any one of the foregoing claims, comprising two said elastic elements (13, 14), each interposed axially between said inertial mass (5) and a respective said head wall (9, 10).

6. The damper according to claim 5, comprising two said friction discs (12), each interposed axially between a respective said elastic element (13, 14) and said inertial mass (5).

7. The damper according to any one of the claims from 3 to 6, wherein said radially internal and radially external annular walls (8, 4), one of said head walls (9) and said hub (2) are produced integral, in one piece, in particular by means of forging.

8. The damper according to any one of the claims from 3 to 7, wherein said inertial mass (5) is supported axially on said radially internal annular wall (8) by one or more friction tapes (11).

## Patentansprüche

1. Torsionsschwingungsdämpfer (1) für Automobilanwendungen mit einer Achse (A) und umfassend:
- eine Nabe (2), die so beschaffen ist, dass sie im Gebrauch mit einer Antriebswelle eines Kraftfahrzeugs winklig gekoppelt werden kann;
- einen ringförmigen Umfangsabschnitt (3), der von einem äußeren ringförmigen Abschnitt besagter Nabe (2) quer auskragt; und
- eine Trägheitsmasse (5), getragen durch besagten ringförmigen Umfangsabschnitt (3);
wobei besagte Trägheitsmasse (5) eine ringförmige Struktur aufweist, koaxial zu besagter Achse (A); wobei besagter ringförmiger Umfangsabschnitt (3) eine zu besagter Achse (A) koaxiale ringförmige Kammer (7) definiert; wobei besagte Trägheitsmasse (5) in besagter Kammer (7) untergebracht ist, sodass die Trägheitsmasse (5) gegenüber besagter Achse (A) Torsionsschwingungen vollführen kann; und wobei der Dämpfer (1) ferner wenigstens ein elastisches Element (13, 14) umfasst, axial eingelagert zwischen besagter Trägheitsmasse (5) und einer Begrenzungsfläche (9, 10) von besagter Kammer (7), sodass das elastische Element (13, 14) im Betrieb Schwingungen von besagter Trägheitsmasse (5) in eine zu besagter Achse (A) parallele Richtung zulässt;
**gekennzeichnet durch** umfassen von wenigstens einer axial zwischen besagtem elastischen Element (13, 14) und besagter Trägheitsmasse (5) angeordneten Reibscheibe (12).

2. Torsionsschwingungsdämpfer nach Anspruch 1, wobei besagte Kammer (7) axial an gegenüberliegenden Seiten durch respektive orthogonal zu besagter Achse (A) verlaufende ringförmige Kopfwandungen (9, 10) begrenzt ist; besagtes elastisches Element (13, 14) axial angeordnet zwischen besagter Trägheitsmasse (5) und einer von besagter ringförmiger Kopfwandung (9, 10), definierend besagte Begrenzungsfläche.

3. Torsionsschwingungsdämpfer nach Anspruch 2, wobei besagte Kammer (7) ferner durch zwei ringförmige Wände begrenzt ist, respektive radial extern und radial intern (4, 8) gegenüber besagter Achse (A) und verbindenden besagte Kopfwandungen (9, 10).

4. Torsionsschwingungsdämpfer nach Anspruch 3, wobei besagte radial externe ringförmige Wand periphär einen Zahnring (4) definiert.

5. Torsionsschwingungsdämpfer nach einem der vorhergehenden Ansprüche, umfassend zwei von besagten elastischen Elementen (13, 14), jedes axial zwischen besagter Trägheitsmasse (5) und einer von besagten respektiven ringförmigen Kopfwandungen (9, 10) angeordnet.

6. Torsionsschwingungsdämpfer nach Anspruch 5, umfassend zwei von besagten Reibscheiben (12), jede axial zwischen einem von besagten respektiven elastischen Elementen (13, 14) und besagter Trägheitsmasse (5) angeordnet.

7. Torsionsschwingungsdämpfer nach einem der Ansprüche 3 bis 6, wobei besagte radial interne und radial externe ringförmige Wand (8, 4), eine von besagten ringförmigen Kopfwandungen (9) und besagte Nabe (2) integral als ein Teil gefertigt sind, insbesondere durch Schmieden.

8. Torsionsschwingungsdämpfer nach einem der Ansprüche 3 bis 7, wobei besagte Trägheitsmasse (5) axial auf besagter radial interner ringförmiger Wand (8) durch ein oder mehr Reibbänder (11) abgestützt ist.

## Revendications

1. Amortisseur (1) de vibrations de torsion pour applications automobiles présentant un axe (A) et comprenant :
- un moyeu (2) adapté pour être couplé de manière angulaire lors d'une utilisation à un arbre d'entraînement d'un véhicule à moteur ;
- une partie périphérique (3) annulaire s'étendant transversalement en porte-à-faux à partir d'une partie annulaire extérieur dudit moyeu (2) ; et
- un massif antivibratoire (5) porté par ladite partie périphérique (3) ;
dans lequel ledit massif antivibratoire (5) présente une structure annulaire, coaxiale par rapport audit axe (A) ; dans lequel ladite partie périphérique (3) définit une chambre (7) annulaire coaxiale par rapport audit axe (A) ; dans lequel ledit massif antivibratoire (5) est logé dans ladite chambre (7) de manière à pouvoir osciller en torsion par rapport audit axe (A) ; et dans lequel l'amortisseur (1) comprend également au moins un élément élastique (13, 14) interposé axialement entre ledit massif antivibratoire (5) et une surface de délimitation (9, 10) de ladite chambre (7) de manière à permettre, lors d'une utilisation, l'oscillation dudit massif antivibratoire (5) dans une direction parallèle audit axe (A) ;
**caractérisé en ce qu'**il comprend au moins un disque de friction (12) interposé axialement entre ledit élément élastique (13, 14) et ledit massif antivibratoire (5).

2. Amortisseur selon la revendication 1, dans lequel ladite chambre (7) est délimitée axialement sur des côtés opposés par des parois de tête (9, 10) annulaires respectives perpendiculaires audit axe (A) ; ledit élément élastique (13, 14) étant axialement interposé entre ledit massif antivibratoire (5) et une desdites parois de tête (9, 10) définissant ladite surface de délimitation.

3. Amortisseur selon la revendication 2, dans lequel ladite chambre (7) est également délimitée par deux parois annulaires, respectivement radialement externe et radialement interne (4, 8) par rapport audit axe (A) et reliant entre elles lesdites parois de tête (9, 10).

4. Amortisseur selon la revendication 3, dans lequel ladite paroi annulaire radialement externe définit de manière périphérique une poulie (4).

5. Amortisseur selon l'une quelconque des revendications précédentes, comprenant deux dits éléments élastiques (13, 14), chacun interposé axialement entre ledit massif antivibratoire (5) et une dite paroi de tête (9, 10) respective.

6. Amortisseur selon la revendication 5, comprenant deux dits disques de friction (12), chacun interposé axialement entre un dit élément élastique (13, 14) respectif et ledit massif antivibratoire (5).

7. Amortisseur selon l'une quelconque des revendications 3 à 6, dans lequel lesdites parois annulaires radialement interne et radialement externe (8, 4), une desdites parois de tête (9) et ledit moyeu (2) sont produits d'un seul tenant, d'une seule pièce, en particulier au moyen d'un forgeage.

8. Amortisseur selon l'une quelconque des revendications 3 à 7, dans lequel ledit massif antivibratoire (5) est supporté axialement sur ladite paroi annulaire radialement interne (8) par un ou plusieurs rubans adhésifs (11).
